# EUROPEAN PATENT APPLICATION

(11) **EP 4 321 588 A1**
(43) Date of publication of application: **14.02.2024**
(21) Application number: 22930171.8
(22) Date of filing: 16.06.2022
(51) Int. Cl.: C09J 127/16, H01M 4/62

(54) **BINDER, AND PREPARATION METHOD THEREFOR AND USE THEREOF**

(71) Applicant: Contemporary Amperex Technology Co., Limited, Ningde City, Fujian 352100 (CN)
(72) Inventor: DUAN, Lianwei, Ningde, Fujian 352100 (CN); LIU, Huihui, Ningde, Fujian 352100 (CN)
(74) Representative: Herrmann, Uwe
(86) International application number: PCT/CN2022/099187
(87) International publication number: WO 2023/240543

(57) **Abstract**

The present application provides a binder, including a polyvinylidene fluoride having a weight average molar mass of 1.5 million to 5.0 million; optionally, the polyvinylidene fluoride has a weight average molar mass of 1.8 million to 3.2 million.

## Description

### TECHNICAL FIELD

The present application relates to the technical field of secondary batteries, and in particular, to a binder and a preparation method and application thereof.

### BACKGROUND

The statements herein merely provide background information related to the present application and may not necessarily constitute prior art.

In the cathode active material layer of secondary batteries, such as lithium-ion batteries, a binder is often required to improve the binding force between the active material layer and the current collector, as well as the binding force between the active material particles. Polyvinylidene fluoride is one of the most widely used binders in lithium-ion batteries, and has advantages such as strong binding ability, insolubility in the electrolyte, no reaction with the electrolyte, and resistance to cracks and no significant decrease in its binding ability after repeated charging. However, in the conventional technology, the amount of polyvinylidene fluoride as a binder often accounts for more than 2.5% of the mass of the raw materials of the active material layer, and an excessive amount of the binder will take up the proportion of the active material in the active material layer, which often results in brittle and low-ductility electrode and a decrease in the cycling performance of the battery.

### SUMMARY

According to various embodiments of the present application, provided is a binder and a preparation method and application thereof.

A first aspect of the present application provides a binder including a polyvinylidene fluoride having a weight average molar mass of 1.5 million to 5.0 million; optionally, the polyvinylidene fluoride has a weight average molar mass of 1.8 million to 3.2 million.

By selecting polyvinylidene fluoride with a weight average molar mass of 1.5 million to 5.0 million as the binder component, when the binder is used in the preparation of an electrode plate of a lithium-ion battery, the binder content in the active material layer can be effectively reduced to avoid defects such as a brittle electrode and impaired cycling performance of the battery caused by the excessive amount of the binder in the conventional technology, and at the same time, the binding force between the components in the active material layer and between the active material layer and the current collector can be maintained.

In some embodiments, the polyvinylidene fluoride has a polydispersity index of 1.5 to 2.5; optionally, the polyvinylidene fluoride has a polydispersity index of 2 to 2.3. A suitable polydispersity index enables the polyvinylidene fluoride, which has a weight average molar mass of 1.5 million to 5.0 million, to be better dispersed in a solvent during the preparation of a cathode slurry, so as to effectively enhance the solid content of the slurry and reduce the production cost.

In some embodiments, the polyvinylidene fluoride has a number average molar mass of 0.6 million to 3 million; optionally, the polyvinylidene fluoride has a number average molar mass of 1 million to 2 million. By controlling the number average molar mass of the polyvinylidene fluoride to be within a certain range, it is possible to make the polydispersity index of the polyvinylidene fluoride within a suitable range.

In some embodiments, the polyvinylidene fluoride has a Dv50 particle size of 50 µm-150 µm; optionally, the polyvinylidene fluoride has a Dv50 particle size of 60 µm-100 µm. Controlling the Dv50 particle size of the polyvinylidene fluoride in a suitable range enables the polyvinylidene fluoride, which has a weight average molar mass of 1.5 million to 5.0 million, to have a suitable solubility, such that in the preparation of cathode plates of lithium-ion batteries, the slow dissolution of polyvinylidene fluoride with large molecular weight can be avoided, thereby accelerating the efficiency of the preparation of cathode slurry. Furthermore, most importantly, the amount of binder used can be controlled at a relatively low level without causing too much negative impact on the binding performance, thus effectively improving the performance of the electrode plates and batteries which are impaired by the large amount of binder in the conventional technology.

In some embodiments, the polyvinylidene fluoride has a crystallinity of 38%-48%; optionally, the polyvinylidene fluoride has a crystallinity of 40%-45%. The degree of crystallinity of the polyvinylidene fluoride also has an impact on the solubility thereof, and thus a suitable range of crystallinity is also an important factor in enabling the binder amount to be maintained at a low level.

In some embodiments, a viscosity of a binder solution made from the polyvinylidene fluoride dissolved in N-methyl pyrrolidone is 3500 mPa·s-5000 mPa·s, and a mass percentage content of the binder in the binder solution is 3%-5%. When preparing the cathode slurry, a certain viscosity of the binder solution is required in order to prevent the settling of the cathode active material and additives such as the conductive agent, so that the slurry can be stored in a more stable manner. In the conventional technology, at least 7% by mass of a binder is required to achieve a solution viscosity of 3500 mPa·s-5000 mPa·s, whereas by using the binder of the present application, it is possible to control the amount of the binder in a range of 3%-5%, which enables a lower content of the binder in a subsequent cathode active material layer.

In a second aspect of the present application, provided is a method of preparing a binder as described in one or more preceding embodiments, including steps of:
conducting a polymerization reaction of vinylidene fluoride monomers for 6 hrs-10 hrs under a non-reactive gas atmosphere, a reaction pressure of 6 MPa-8 MPa, and a reaction temperature of 45°C-60°C; and
adding a chain transfer agent, and when a pressure in the reaction system was reduced to 2 MPa-2.5 MPa, terminating the reaction and carrying out a solid-liquid separation to retain a solid phase.

By controlling the temperature, the pressure, and the duration of the polymerization reaction within a suitable range, the polyvinylidene fluoride is able to react in the form of homopolymerization, thereby obtaining polyvinylidene fluoride with a higher degree of regularity, and the weight average molar mass of the polyvinylidene fluoride can be controlled within a predetermined range to achieve a low level of the binder in the cathode slurry.

In some embodiments, the chain transfer agent includes one or more of cyclohexane, isopropanol, methanol, and acetone.

In some embodiments, an amount of the chain transfer agent used is 1.5%-3% of a mass of the vinylidene fluoride monomers. By controlling the amount of chain transfer agent within a suitable range, the polymer chain length can be controlled so as to obtain a polyvinylidene fluoride product with a molecular weight within a suitable range.

In some embodiments, the polymerization reaction includes steps of:
adding a solvent and a dispersant to a container, evacuating and filling the container with a non-reactive gas;
adding an initiator and a pH adjuster to the container, adjusting pH to 6.5-7, and then adding the vinylidene fluoride monomers so that a pressure in the container reaches 6 MPa-8 MPa; and
heating, after stirring for 30 min-60 min, to 45°C-60°C for polymerization reaction.
mixing materials thoroughly before heating up to conduct the polymerization reaction can make the reaction more fully reacted, and the polydispersity index, crystallinity and particle size of the polyvinylidene fluoride are more appropriate.

In some embodiments, an amount of the solvent used is 2-8 times the mass of the vinylidene fluoride monomers.

In some embodiments, the dispersant includes one or more of cellulose ether and polyvinyl alcohol; optionally, the cellulose ether includes one or more of methyl cellulose ether and carboxyethyl cellulose ether.

In some embodiments, an amount of the dispersant is 0.1%-0.3% of a mass of the vinylidene fluoride monomers.

In some embodiments, the initiator is an organic peroxide; optionally, the organic peroxide includes one or more of tert-pentyl peroxypivalate, tert-amyl peroxypivalate, 2-ethyl peroxydicarbonate, diisopropyl peroxydicarbonate, and tert-butyl peroxypivalate.

In some embodiments, an amount of the initiator is 0.15%-1% of a mass of the vinylidene fluoride monomers.

In some embodiments, the pH adjuster includes one or more of potassium carbonate, potassium bicarbonate, sodium carbonate, sodium bicarbonate, and ammonia water.

In some embodiments, an amount of the pH adjuster is 0.05%-0.2% of a mass of the vinylidene fluoride monomers.

In a third aspect of the present application, provided is an application of polyvinylidene fluoride as described in one or more preceding embodiments in the preparation of a binder.

In a fourth aspect of the present application, provided is a secondary battery including a cathode plate, a separator, and an anode plate, the separator is disposed between the cathode plate and the anode plate;
the cathode plate includes a cathode current collector and a cathode active material layer disposed on at least one surface of the cathode current collector, the cathode active material layer includes a binder as described in one or more preceding embodiments.

In some embodiments, a mass percentage content of the binder in the cathode active material layer is 0.6%-1.2%; optionally, a mass percentage content of the binder is 0.6%-0.8%. In conventional technologies, the amount of binder in the cathode active material layer often reaches 2.5% or higher, and when the amount is reduced to 2% or less, the binding between particles in the cathode active material layer or the binding between the active material layer and the current collector will be significantly affected; whereas by using the binder in the present application, the amount of the binder can be greatly reduced to 1.2% or less compared with that used in the conventional technologies, without significant influence on the binding performance. The low binder amount effectively improves the brittleness and cycle performance of the electrode plate.

In a fifth aspect of the present application, provided is a battery module including the secondary battery as described in one or more preceding embodiments.

In a sixth aspect of the present application, provided is a battery pack including the battery module of the preceding claim.

In a seventh aspect of the present application, provided is an electric device including the secondary battery as described in one or more preceding embodiments, the battery module as described in the preceding embodiment, and the battery pack as described in the preceding embodiment.

Details of one or more embodiments of the present application are set forth in the accompanying drawings and description below. Other features, objects, and advantages of the present application will become apparent from the description, the accompanying drawings, and the claims.

### BRIEF DESCRIPTION OF THE DRAWINGS

In order to better describe and illustrate those embodiments or examples of the applications disclosed herein, reference may be made to one or more of the accompanying drawings. The additional details or examples used to describe the accompanying drawings should not be considered a limitation on the scope of any of the disclosed application, the embodiments or examples presently described, and the best mode of these applications as presently understood.

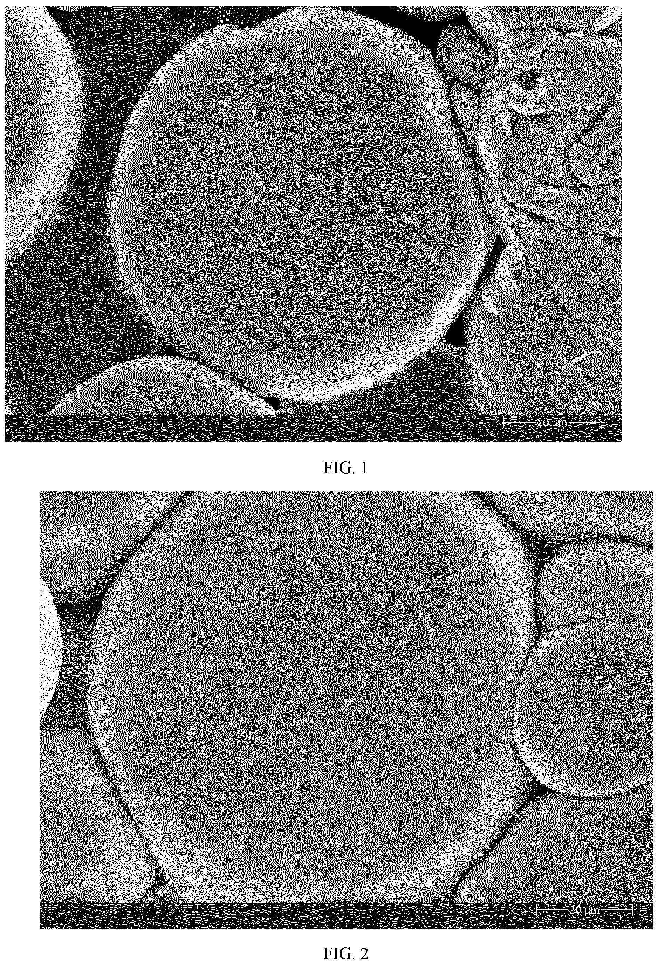

FIG. 1 is a scanning electron microscope image of a polyvinylidene fluoride particle of an embodiment of the present application;
FIG. 2 is a scanning electron microscope image of a polyvinylidene fluoride particle of an embodiment of the present application;

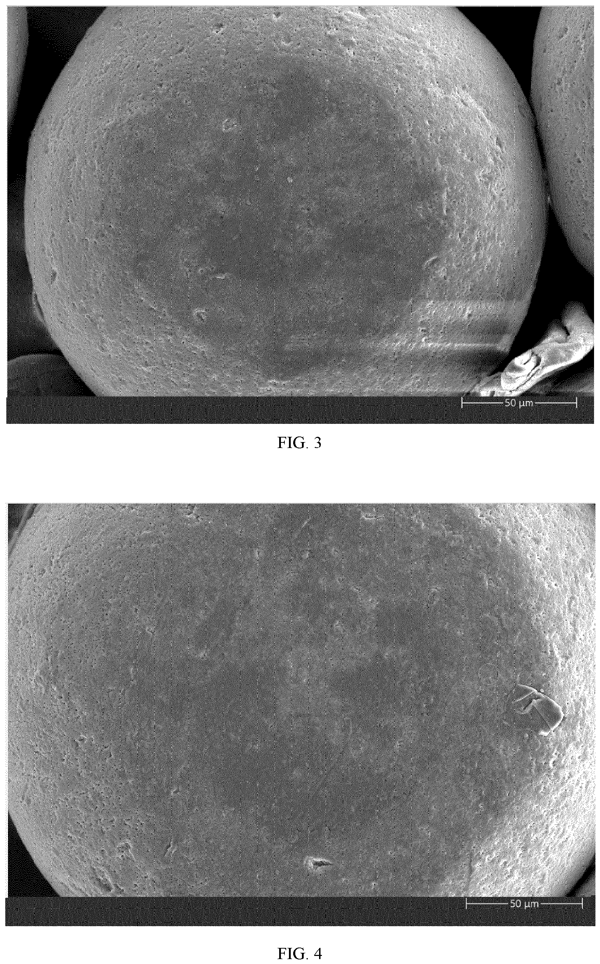

FIG. 3 is a scanning electron microscope image of a polyvinylidene fluoride particle of an embodiment of the present application;
FIG. 4 is a scanning electron microscope image of a polyvinylidene fluoride particle of an embodiment of the present application;
FIG. 5 is a scanning electron microscope image of Comparative Example 1 of the present application;
FIG. 6 is a schematic diagram of a secondary battery of an embodiment of the present application;
FIG. 7 is an exploded view of the secondary battery of the embodiment of the present application shown in FIG. 6;
FIG. 8 is a schematic diagram of a battery module of an embodiment of the present application;
FIG. 9 is a schematic diagram of a battery pack of an embodiment of the present application;
FIG. 10 is an exploded view of the battery pack of the embodiment of the present application shown in FIG. 9; and
FIG. 11 is a schematic diagram of an electric device in which a secondary battery is used as a power source in an embodiment of the present application.

Reference numbers in the drawings are as follows:
1: battery pack; 2: upper container body; 3: lower container body; 4: battery module; 5: secondary battery; 51: casing; 52: electrode assembly; and 53: cover plate.

### DETAILED DESCRIPTION OF THE EMBODIMENTS

In order to make the purpose, technical proposals and advantages of the present application more clearly understood, the present application is further described in detail below in conjunction with the accompanying drawings and embodiments. It should be understood that the specific embodiments described herein are only for explaining the present application and are not intended to limit the present application.

Unless otherwise defined, all technical and scientific terms used herein have the same meaning as commonly understood by those skilled in the art belonging to the present application. Terms used herein in the specification of the present application are used only for the purpose of describing specific embodiments and are not intended to limit the present application. The term "and/or" as used herein includes any and all combinations of one or more of the relevant listed items.

The "range" disclosed in the application is defined in the form of a lower limit and an upper limit, and the given range is limited by selecting a lower limit and an upper limit, and the selected lower limit and upper limit define the boundary of a special range. Ranges defined in this manner may be inclusive or exclusive and may be combined arbitrarily, i.e., any lower limit may be combined with any upper limit to form a range. For example, if ranges of 60-120 and 80-110 are listed for a particular parameter, it is understood that ranges of 60-110 and 80-120 are contemplated. Additionally, if the minimum range values 1 and 2 are listed, and if the maximum range values 3, 4, and 5 are listed, the following ranges are all expected: 1-3, 1-4, 1-5, 2-3, 2-4, and 2-5. In the present application, unless otherwise stated, the numerical range "a-b" represents an abbreviated representation of any combination of real numbers between a and b, where a and b are both real numbers. For example, the numerical range "0-5" indicates that all real numbers between "0-5" have been listed in this article, and "0-5" is only an abbreviated representation of the combination of these values. In addition, when expressing that a certain parameter is an integer ≥ 2, it is equivalent to disclosing that the parameter is an integer such as 2, 3, 4, 5, 6, 7, 8, 9, 10, 11, 12, etc.

Unless otherwise specified, all implementation modes and optional implementation modes of the present application may be combined with each other to form new technical proposals.

Unless otherwise specified, all technical features and optional technical features of the present application may be combined with each other to form new technical proposals.

Unless otherwise specified, all the steps in the present application may be performed sequentially or randomly, preferably sequentially. For example, the method including steps (a) and (b) means that the method may include steps (a) and (b) performed in sequence, and may also include steps (b) and (a) performed in sequence. For example, mentioning that the method may also include step (c), means that step (c) may be added to the method in any order, for example, the method may include steps (a), (b) and (c), may also include steps (a), (c) and (b), and may also include steps (c), (a) and (b).

Unless otherwise specified, "include" and "include" mentioned in the application represent an open type or a closed type. For example, the "include" and "include" may mean that other components not listed may be included or included, or only listed components may be included or included.

Unless otherwise specified, in the present application, the term "or" is inclusive. For example, the phrase "A or B" means "A, B, or both A and B." More specifically, the condition "A or B" is satisfied by either: A is true (or exists) and B is false (or does not exist); A is false (or does not exist) and B is true (or exists); or both A and B are true (or exist).

Generally, binders are an essential raw material for preparing a cathode active material layer, which provides binding force between the raw material particles of the active material layer and between the active material layer and a current collector layer to ensure the normal operation of the secondary battery during multiple charging and discharging processes. In order to ensure a sufficient binding force, in conventional technologies, a binder with a mass percentage content of 2.5% or higher of the cathode active material layer is generally required. However, an excessively high binder amount can lead to a high brittleness of the finished electrode plate, which is prone to cracking during use and processing, affecting the production yield and the safety of use of the battery. Moreover, the binder content being too high is not favorable to the cycling performance of the battery. Therefore, there is an urgent need in the field of secondary batteries to reduce the amount of binder in the cathode active material layer without causing negative effects on the bonding performance thereof.

Based on the above, the inventors of the present application, through extensive research, provide a binder including polyvinylidene fluoride having a weight average molar mass of 1.5 million to 5.0 million; optionally, the polyvinylidene fluoride has a weight average molar mass of 1.8 million to 3.2 million. The weight average molar mass of the polyvinylidene fluoride may also be, for example, 1.6 million, 1.7 million, 1.8 million, 1.9 million, 2.0 million, 2.1 million, 2.2 million, 2.3 million, 2.4 million, 2.5 million, 2.6 million, 2.7 million, 2.8 million, 2.9 million, 3.0 million, 3.1 million, 3.2 million, 3.3 million, 3.4 million, 3.5 million, 3.6 million, 3.7 million, 3.8 million, 3.9 million, 4.0 million, 4.1 million, 4.2 million, 4.3 million, 4.4 million, 4.5 million, 4.6 million, 4.7 million, 4.8 million, or 4.9 million, or within a range defined by any two of the above values.

By selecting polyvinylidene fluoride with a weight average molar mass of 1.5 million to 5.0 million as a binder component, when the binder is used in the preparation of an electrode plate of a lithium-ion battery, the binder content in the active material layer can be effectively reduced to avoid defects such as a brittle electrode plate and impaired cycling performance of the battery caused by the high content of the binder in the conventional technologies, at the same time, without reducing the binding force between the components of the active material layer and between the active material layer and the current collector.

In some embodiments, the polydispersity index of the polyvinylidene fluoride is 1.5-2.5; optionally, the polydispersity index of the polyvinylidene fluoride is 2-2.3. The polydispersity index of the polyvinylidene fluoride may also be, for example, 1.6, 1.7, 1.8, 1.9, 2, 2.1, or 2.2, or within a range defined by any two of the above values. A suitable polydispersity index enables the polyvinylidene fluoride with the weight average molar mass of 1.5 million to 5 million to have better dispersibility in the solvent during preparation of the cathode slurry, so that the solid content of the slurry can be effectively increased and the production cost can be reduced.

In the present application, the polydispersity index may be tested by a method known in the art, for example, by using a Waters 2695 Isocratic HPLC gel chromatography (Differential Refractive Detector 2141). A specimen of polystyrene solution with a mass fraction of 3.0% was used as a reference, and a matched column (oil-type: Styragel HT5 DMF7.8*300mm+Styragel HT4) was selected. The purified N-methyl pyrrolidone (NMP) solvent was used to formulate a 3.0% binder gel solution, and the formulated solution was left to stand for future use. When testing, tetrahydrofuran was first drawn with a syringe, rinsed and repeated several times. Then 5 ml of an test solution was drawn, the air in the syringe was expelled, and the tip of the needle was wiped dry. Finally, the test solution was slowly injected into the sample inlet. The data were obtained after the signal was stabilized. The weight average molar mass a and number average molar mass b were recorded respectively. The polydispersity index = a/b.

In some embodiments, the number average molar mass of the polyvinylidene fluoride is 0.6 million-3 million; optionally, the number average molar mass of the polyvinylidene fluoride is 1 million to 2 million. The number average molar mass of the polyvinylidene fluoride, for example, may also be 0.7 million, 0.8 million, 0.9 million, 1 million, 1.1 million, 1.2 million, 1.3 million, 1.4 million, 1.5 million, 1.6 million, 1.7 million, 1.8 million, or 1.9 million, or within a range defined by any two of the above values. By controlling the number average molar mass of the polyvinylidene fluoride to be within a certain range, it is possible to make the polydispersity index of the polyvinylidene fluoride to be within a suitable range.

In some embodiments, the Dv50 particle size of the polyvinylidene fluoride is 50 µm-150 µm; optionally, the Dv50 particle size of the polyvinylidene fluoride is 60 µm-100 µm. The Dv50 particle size of the polyvinylidene fluoride, for example, may also be 70 µm, 80 µm, 90 µm, 100 µm, 110 µm, 120 µm, 130 µm, or 140 µm or within a range defined by any two of the above values. Controlling the Dv50 particle size of the polyvinylidene fluoride in a suitable range enables the polyvinylidene fluoride with a weight average molar mass of 1.5 million to 5 million to have a suitable solubility, so that when used for the preparation of the cathode plate of the lithium-ion battery, the slow dissolution of the polyvinylidene fluoride with a large molecular weight can be avoided, thus accelerating the preparation speed of the cathode slurry, and most importantly, keeping the amount of the binder at a low level without causing significant negative impact on the binding performance. Therefore, the performance of the electrode and the battery which deteriorate due to the high amount of binder in the traditional technology can be effectively improved.

In the present application, Dv50 refers to: in the particle size distribution curve, the particle size corresponding to when the cumulative particle size distribution number of particles reaches 50%, which has the physical meaning that the particles with a size smaller (or larger) than it account for 50% of the particles. As an example, the Dv50 can be conveniently determined by a laser particle size analyzer, such as a Mastersizer 2000E laser particle size analyzer from Malvern Instruments Ltd., UK, according to the GB/T 19077-2016 particle size distribution laser diffraction method.

In some embodiments, the polyvinylidene fluoride has a crystallinity of 38%-48%; optionally, the polyvinylidene fluoride has a crystallinity of 40%-45%. The degree of crystallinity of the polyvinylidene fluoride may, for example, also be 39%, 40%, 41%, 42%, 43%, or 44%, or within a range defined by any two of the above values. The degree of crystallinity of the polyvinylidene fluoride also has an effect on the solubility thereof, and thus a suitable range of crystallinity is also an important factor in enabling the binder amount to be maintained at a low level.

In the present application, the crystallinity may be tested by a method known in the art, for example, the crystallinity is determined by differential scanning calorimetry (DSC), which is capable of determining the amount of heat released when the crystalline polymer is melted, and which is the heat of fusion of the crystalline part of the polymer, ΔHf. The heat of fusion of a polymer is directly proportional to the degree of crystallinity thereof, and thus the degree of crystallinity θ = heat of fusion of partial crystallization of the polymer/heat of fusion of 100% crystallization of the polymer × 100%, where the heat of fusion of 100% crystallization of the polymer is known.

In some embodiments, the viscosity of the binder solution prepared by dissolving the polyvinylidene fluoride in N-methyl pyrrolidone is 3500 mPa·s-5000 mPa·s, and the binder solution has a mass percent of the binder of 3%-5%. The viscosity of the binder solution may also be, for example, 3750 mPa·s, 4000 mPa·s, 4250 mPa·s, 4500 mPa·s, or 4750 mPa·s, or it may be within a range defined by any two of the above values. When preparing the cathode slurry, the binder solution needs to have a certain viscosity in order to prevent the settling of the cathode active material as well as the conductive agent and other additives, so that the slurry can be stored in a more stable manner. In conventional technologies, at least 7% by mass of a binder is required to achieve a solution viscosity of 3500 mPa·s-5000 mPa s, whereas by using the binder of the present application, it is possible to control the amount of the binder in the range of 3%-5%, which allows a lower binder content in the subsequent cathode active material layer.

In the present application, the viscosity of the binder solution may be tested using methods known in the art. As an example, the viscosity of the binder solution may, for example, be tested using an Anton Paar rotational rheometer to test the dynamic viscosity of the material, with a shear rate of 0.1 s⁻¹-100 s⁻¹ and measurement at 31 points, and be fitted to obtain a consistency factor, which characterizes the viscosity of the binder solution.

In a second aspect of the present application, there is provided a method of preparing a binder of one or more of the preceding embodiments, including the steps of:

carrying out a polymerization reaction of vinylidene fluoride monomer for 6 hrs-10 hrs under a non-reactive gas atmosphere, a reaction pressure of 6 MPa-8 MPa, and a reaction temperature of 45°C-60°C; and

adding a chain transfer agent, and terminating the reaction when the pressure in the reaction system is reduced to 2 MPa-2.5 MPa, performing a solid-liquid separation to retain the solid phase.

It can be understood that a non-reactive gas is a gas that does not react with the reactants in the reaction system, and common non-reactive gases may include, for example, inert gases such as argon and nitrogen.

In some embodiments, the reaction pressure may also be, for example, 6.5 MPa, 7 MPa, or 7.5 MPa.

In some embodiments, the reaction temperature may also be, for example, 50°C or 55°C.

In some embodiments, the time of the polymerization reaction may also be, for example, 7 hrs, 8 hrs or 9 hrs.

By controlling the temperature, pressure, and time of the polymerization reaction within a suitable range, the polyvinylidene fluoride reacts in the form of homopolymerization, thereby obtaining polyvinylidene fluoride with a higher degree of regularity, and the weight average molar mass of the polyvinylidene fluoride is controlled within a predetermined range to achieve a low binder amount in the cathode slurry.

In some embodiments, the chain transfer agent includes one or more of cyclohexane, isopropanol, methanol, and acetone.

In some embodiments, the amount of chain transfer agent is 1.5%-3% of the mass of the vinylidene fluoride monomers, and the amount of chain transfer agent may also be, for example, 2% or 2.5%. Controlling the amount of chain transfer agent within a suitable range enables the polymer chain length to be controlled, thereby obtaining a polyvinylidene fluoride product of a molecular weight in a suitable range.

In some embodiments, the polymerization reaction includes the following steps:
adding a solvent and a dispersant to a container, which is evacuated and then filled with a non-reactive gas;
adding an initiator and a pH adjuster to the container to adjust the pH to 6.5-7, and then adding vinylidene fluoride monomers to bring the pressure in the container to 6 MPa-8 MPa; and
after stirring for 30 min-60 min, heating up to 45°C-60°C for the polymerization reaction.

Mixing the materials well before heating up for the polymerization reaction can make the reaction more thorough, and the polydispersity index, crystallinity and particle size of the polyvinylidene fluoride are more appropriate.

In some embodiments, the amount of solvent is 2-8 times the mass of the vinylidene fluoride monomers. The amount of solvent may for example also be 3, 4, 5, 6 or 7 times the mass of the vinylidene fluoride monomers. A suitable solvent may include, for example, water, preferably deionized water.

In some embodiments, the dispersant includes one or more of cellulose ether and polyvinyl alcohol; optionally, the cellulose ether includes one or more of methyl cellulose ether and carboxyethyl cellulose ether.

In some embodiments, the amount of dispersant is 0.1%-0.3% by mass of the vinylidene fluoride monomers. The amount of dispersant may also be, for example, 0.2%.

In some embodiments, the initiator is an organic peroxide; optionally, the organic peroxide includes one or more of tert-pentyl peroxypivalate, tert-amyl peroxypivalate, 2-ethyl peroxydicarbonate, diisopropyl peroxydicarbonate, and tert-butyl peroxypivalate.

In some embodiments, the amount of initiator is 0.15-1% by mass of the vinylidene fluoride monomers. The amount of initiator may also be, for example, 0.2%, 0.4%, 0.6%, or 0.8%.

In some embodiments, the pH adjuster includes one or more of potassium carbonate, potassium bicarbonate, sodium carbonate, sodium bicarbonate, and ammonia.

In some embodiments, the amount of the pH adjuster is 0.05%-0.2% by mass of the vinylidene fluoride monomers. The amount of the pH adjuster may also be, for example, 0.1%-0.15%.

In a third aspect of the present application, there is provided an application of the polyvinylidene fluoride as defined in one or more of the preceding embodiments in the preparation of a binder.

In a fourth aspect of the present application, there is provided a secondary battery including a cathode plate, a separator, and an anode plate, the separator is provided between the cathode plate and the anode plate;

The cathode plate includes a cathode current collector and a cathode active material layer disposed on at least one surface of the cathode current collector, the cathode active material layer including a binder of one or more of the above embodiments.

In some embodiments, the mass percentage of the binder in the cathode active material layer is 0.6%-1.2%; optionally, the mass percentage of the binder is 0.6%-0.8%. The amount of the binder may also be, for example, 0.7%, 0.8%, 0.9%, 1% or 1.1%. In conventional technologies, the binder amount in the cathode active material layer often reaches 2.5% or higher, and when the amount is reduced to 2% or less, the binding between the particles in the cathode active material layer or the binding between the active material layer and the current collector will be obviously affected, whereas by adopting the binder of the present application, the binder amount can be greatly reduced to 1.2% or less compared with that in the conventional technologies, without having an obvious effect on the binding properties. The low binder amount improves the brittleness and cycle performance of the electrode plate effectively.

In a fifth aspect of the present application, there is provided a battery module including the secondary battery of one or more of the above embodiments.

In a sixth aspect of the present application, there is provided a battery pack including the battery module of the preceding claim.

In a seventh aspect of the present application, there is provided an electric device including one or more of the secondary battery of one or more of the above embodiments, the battery module of the above embodiment, and the battery pack of the above embodiment.

In addition, the secondary battery, battery module, battery pack and electric device of the present application are described below with reference to the accompanying drawings.

In one embodiment of the present application, a secondary battery is provided.

Typically, a secondary battery includes a cathode plate, an anode plate, an electrolyte, and a separator. During the charging and discharging process of the battery, active ions are intercalated and deintercalated back and forth between the cathode plate and the anode plate. The electrolyte is used for conducting ions between the cathode plate and the anode plate. The separator is disposed between the cathode plate and the anode plate, which mainly plays the role of preventing the cathode and anode from short-circuiting, and at the same time allows the ions to pass through.

### Cathode plate

The cathode plate includes a cathode current collector and a cathode active material layer disposed on at least one surface of the cathode current collector, the cathode active material layer including the binder provided in the first aspect of the present application.

As an example, the cathode current collector has two surfaces opposite each other in a thickness direction thereof, and the cathode active material layer is provided on either or both of the two opposite surfaces of the cathode current collector.

In some embodiments, the cathode current collector may be a metal foil or a composite current collector. For example, as a metal foil, an aluminum foil may be used. The composite current collector may include a base layer of polymeric material and a metal layer formed on at least one surface of the polymer base layer. The composite current collector may be formed by forming a metal material (aluminum, aluminum alloy, nickel, nickel alloy, titanium, titanium alloy, silver and silver alloy, and the like) on a polymer base material, such as a base material of polypropylene (PP), polyethylene terephthalate (PET), polybutylene terephthalate (PBT), polystyrene (PS), polyethylene (PE), and the like.

In some embodiments, the cathode active material may be a known cathode active material in the art for use in batteries. As examples, the cathode active material may include at least one of the following materials: lithium-containing phosphates with an olivine structure, lithium transition metal oxides, and modified compounds thereof. However, the present application is not limited to these materials, and other conventional materials that may be used as the cathode active material of the battery may also be used. These cathode active materials may be used alone or in a combination of two or more. Examples of lithium transition metal oxides may include, but are not limited to, lithium cobalt oxides (e.g., LiCoO₂), lithium nickel oxides (e.g., LiNiO₂), lithium manganese oxides (e.g., LiMnO₂, LiMn₂O₄), lithium nickel cobalt oxides, lithium manganese cobalt oxides, lithium nickel manganese oxides, lithium nickel cobalt manganese oxides (e.g., LiNi_{1/3}Co_{1/3}Mn_{1/3}O₂ (which may also be abbreviated as NCM333), LiNi_{0.5}Co_{0.2}Mn_{0.3}O₂ (which may also be abbreviated as NCM523), LiNi_{0.5}Co_{0.25}Mn_{0.25}O₂ (which may also be abbreviated as NCM211), LiNi_{0.6}Co_{0.2}Mn_{0.2}O₂ (which may also be abbreviated as NCM622), LiNi_{0.8}Co_{0.1}Mn_{0.1}O₂ (which may also be abbreviated as NCM811), lithium nickel cobalt aluminum oxides (e.g., LiNi_{0.85}Co_{0.15}Al_{0.05}O₂), modified compounds thereof, and the like. Examples of lithium-containing phosphates with an olivine structure may include, but are not limited to, at least one of lithium iron phosphate (e.g., LiFePO₄ (which may also be abbreviated as LFP)), a composite of lithium iron phosphate and carbon, lithium manganese phosphate (e.g., LiMnPO₄), a composite of lithium manganese phosphate and carbon, lithium manganese iron phosphate, a composite of lithium manganese iron and carbon.

In some embodiments, the cathode active material layer optionally also includes a conventional binder in addition to the binder provided in the first aspect of the present application. As an example, the conventional binder may include at least one of polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer, and a fluorinated acrylate resin.

In some embodiments, the cathode active material layer optionally further includes a conductive agent. As an example, the conductive agent may include at least one of superconducting carbon, acetylene black, carbon black, Ketjen black, a carbon dot, a carbon nanotube, graphene, and a carbon nanofiber.

In some embodiments, the cathode plate may be prepared by: dispersing the above-described components for preparing the cathode plate, such as the cathode active material, the conductive agent, the binder, and any other components in a solvent (e.g., N-methyl pyrrolidone) to form a cathode slurry; and coating the cathode slurry on a cathode current collector, and obtaining the cathode plate after drying, cold pressing, and the like.

### Anode plate

The anode plate includes an anode current collector and an anode film layer disposed on at least one surface of the anode current collector, the anode film layer including an anode active material.

As an example, the anode current collector has two surfaces opposite in the thickness direction thereof, and the anode film layer is provided on either or both of the two opposite surfaces of the anode current collector.

In some embodiments, the anode collector may be a metal foil or a composite current collector. For example, as a metal foil, an aluminum foil may be used. The composite current collector may include a base layer of polymeric material and a metal layer formed on at least one surface of the polymer base layer. The composite current collector may be formed by forming a metal material (copper, copper alloys, nickel, nickel alloys, titanium, titanium alloys, silver and silver alloys, and the like) on a polymer base material, such as a base material of polypropylene (PP), polyethylene terephthalate (PET), polybutylene terephthalate (PBT), polystyrene (PS), polyethylene (PE), and the like.

In some embodiments, the anode active material may be an anode active material for use in batteries known in the art. As examples, the anode active material may include at least one of the following materials: artificial graphite, natural graphite, soft carbon, hard carbon, silicon-based material, tin-based material, and lithium titanate. The silicon-based material may be at least one selected from monolithic silicon, silicon oxides, silicon-carbon complexes, silicon-nitrogen complexes, and silicon alloys. The tin-based material may be at least one selected from monolithic tin, tin oxides, and tin alloys. However, the present application is not limited to these materials and other conventional materials that can be used as anode active materials for batteries can be used. These anode active materials may be used alone, or in a combination of two or more.

In some embodiments, the anode film layer optionally further includes a binder. The binder may be at least one selected from styrene butadiene rubber (SBR), polyacrylic acid (PAA), sodium polyacrylate (PAAS), polyacrylamide (PAM), polyvinyl alcohol (PVA), sodium alginate (SA), polymethylmethacrylate (PMAA), and carboxymethyl chitosan (CMCS).

In some embodiments, the anode film layer further optionally includes a conductive agent. The conductive agent may be selected from at least one of superconducting carbon, acetylene black, carbon black, Ketjen black, a carbon dot, a carbon nanotube, graphene, and a carbon nanofiber.

In some embodiments, the anode film layer optionally includes other additives, such as a thickener (e.g., sodium carboxymethylcellulose (CMC-Na)) and the like.

In some embodiments, the anode plate may be prepared by: dispersing the above-described components for preparing the anode plate, such as the anode active material, the conductive agent, the binder, and any other components, in a solvent (e.g., deionized water) to form an anode slurry; coating the anode slurry on the anode current collector, and obtaining the anode plate after drying, cold pressing, and the like.

### Electrolyte

The electrolyte is used for ion conduction between the cathode plate and the anode plate. The present application has no specific limitation on the type of electrolyte, which may be selected according to the needs. For example, the electrolyte may be in a liquid, gel, or solid state.

In some embodiments, the electrolyte employs an electrolyte solution. The electrolyte solution includes an electrolyte salt and a solvent.

In some embodiments, the electrolyte salt may be at least one selected from lithium hexafluorophosphate, lithium tetrafluoroborate, lithium perchlorate, lithium hexafluoroarsenate, lithium bis(trifluoromethanesulfonyl)amide, lithium bis(trifluoromethanesulfonyl)imide, lithium trifluoromethanesulfonate, lithium difluorophosphate, lithium difluoro(oxalato)borate, lithium bis(oxalate)borate, lithium difluoro(bisoxalato)phosphate and lithium tetrafluoro oxalato phosphate.

In some embodiments, the solvent may be at least one selected from ethylene carbonate, propylene carbonate, methyl ethyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, and 1,4-butyrolactone, sulfolane, dimethyl sulfone, methyl ethyl sulfone, and diethyl sulfone.

In some embodiments, the electrolyte optionally further includes an additive. For example, the additive may include an anode film-forming additive, a cathode film-forming additive, and may also include additives that can improve certain properties of the battery, such as additives that improve the overcharging performance of the battery, additives that improve the high- or low-temperature performance of the battery, and the like.

### Separator

In some embodiments, the secondary battery also includes a separator. The present application has no special limitation on the type of the separator, and any well-known porous separator with good chemical and mechanical stability may be used.

In some embodiments, the material of the separator may be at least one selected from glass fiber, nonwoven fabric, polyethylene, polypropylene, and polyvinylidene fluoride. The separator may be a single-layer film or a multilayer composite film, which is not particularly limited. Where the separator is a multilayer composite film, the materials of the layers may be the same or different without particular limitation.

In some embodiments, the cathode plate, the anode plate, and the separator may be made into an electrode assembly by a winding process or a laminating process.

In some embodiments, the secondary battery may include an outer packaging. The outer packaging may be used to encapsulate the electrode assembly and electrolyte described above.

In some embodiments, the outer packaging of the secondary battery may be a hard case, such as a hard plastic case, an aluminum case, a steel case, and the like. The outer packaging of the secondary battery may also be a soft pack, such as a pouch-type soft pack. The material of the soft pack may be plastic, such as polypropylene, polybutylene terephthalate, and polybutylene succinate.

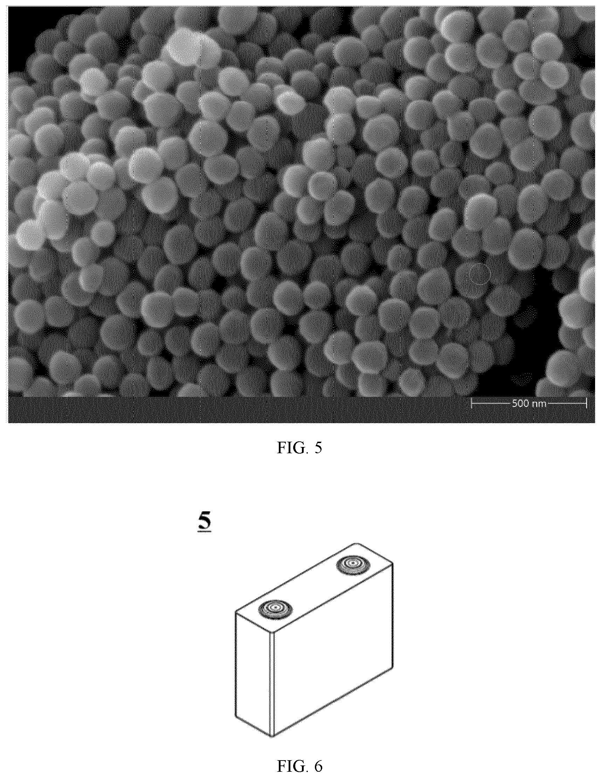

The present application does not specifically limit the shape of the secondary battery, which may be cylindrical, square, or any other arbitrary shape. For example, FIG. 6 shows a secondary battery 5 having a square structure as an example.

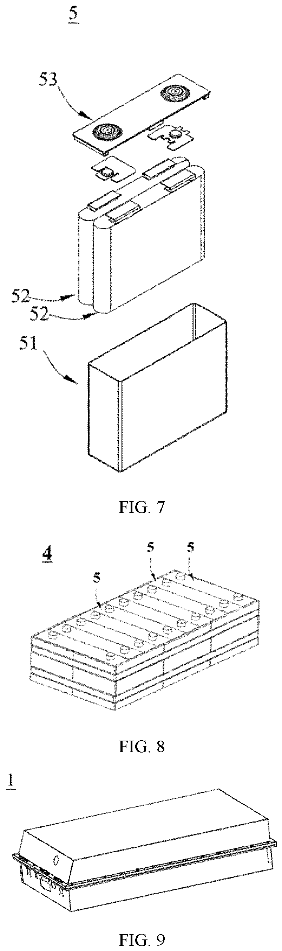

In some embodiments, referring to FIG. 7, the outer packaging may include a casing 51 and a cover plate 53. The casing 51 may include a base plate and side plates attached to the base plate, the base plate and the side plates enclosing to form an accommodation cavity. The casing 51 has an opening in communication with the accommodation cavity, and the cover plate 53 may cover the opening to close the accommodation cavity. The cathode plate, the anode plate, and the separator may be wound or laminated to form an electrode assembly 52. the electrode assembly 52 is encapsulated in the accommodation cavity. The electrolyte is infiltrated in the electrode assembly 52. The number of electrode assemblies 52 contained in the secondary battery 5 may be one or more, which may be selected by those skilled in the art according to specific practical needs.

In some embodiments, the secondary battery may be assembled into a battery module, and the number of secondary batteries in the battery module may be one or more, the exact number may be selected by those skilled in the art based on the application and capacity of the battery module.

FIG. 8 is an exemplary battery module 4. Referring to FIG. 8, a plurality of secondary batteries 5 may be provided in the battery module 4 in a sequential arrangement along a lengthwise direction of the battery module 4. Of course, they may also be arranged in any other manner. Further, the plurality of secondary batteries 5 may be secured by fasteners.

Optionally, the battery module 4 may further include a housing having a receiving space in which the plurality of secondary batteries 5 are accommodated.

In some embodiments, the above battery module may also be assembled into a battery pack, and the number of battery modules in the battery pack may be one or more, the exact number of which may be selected by those skilled in the art according to the application and capacity of the battery pack.

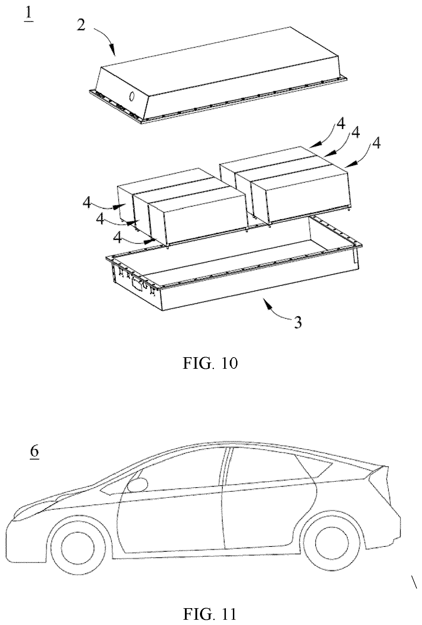

FIGS. 9 and 10 show an exemplary battery pack 1. Referring to FIGS. 9 and 10, the battery pack 1 may include a battery container and a plurality of battery modules 4 disposed in the battery container. The battery container includes an upper container body 2 and a lower container body 3, the upper container body 2 is capable of covering on the lower container body 3 and forming a closed space for accommodating the battery modules 4. The plurality of battery modules 4 may be arranged in the battery container in any manner.

Additionally, the present application provides an electric device, the electric device includes at least one of the secondary battery, the battery module, or the battery pack provided herein. The secondary battery, the battery module, or the battery pack may be used as a power source for the electric device or as an energy storage unit for the electric device. The electric device may include, but is not limited to, mobile devices, electric vehicles, electric trains, ships and satellites, energy storage systems, and the like. The mobile device may be, for example, a cell phone, a laptop, and the like.; the electric vehicle may be, for example, a pure electric vehicle, a hybrid electric vehicle, a plug-in hybrid electric vehicle, an electric bicycle, an electric scooter, an electric golf cart, an electric truck, and the like, but is not limited thereto.

For the electric device, a secondary battery, a battery module or a battery pack may be selected according to the needs of its use.

FIG. 11 shows, as an example, the electric device 6. The electric device is a pure electric vehicle, a hybrid electric vehicle, or a plug-in hybrid electric vehicle, etc. In order to satisfy the need for high power and high energy density of the secondary battery of the electric device, a battery pack or a battery module may be used.

Another example of the device may be a cell phone, a tablet, a laptop, and the like. The device is typically required to be compact and lightweight, and may utilize a secondary battery as a power source.

Details of one or more examples of the present application are set forth in the accompanying drawings and description below. Other features, objects, and advantages of the present application will become apparent from the specification, the accompanying drawings, and the claims.

The present application is hereinafter described in further detail in connection with specific examples and comparative examples. For the experimental parameters not mentioned in the following specific examples, reference is preferred to the guidelines given in the present application document, and reference may also be made to the experimental manuals in the art or other experimental methods known in the art, or to the experimental conditions recommended by the manufacturer. It is understood that the apparatus and raw materials used in the following examples are relatively specific, and may not be limited thereto in other specific examples; the weights of the relevant components mentioned in the embodiments of the present application specification may not only refer to the specific contents of the components, but also indicate the proportion relation of weights of the components, so that as long as the contents of the relevant components are proportionally increased or reduced in accordance with the content of the components in the examples of the present application, all contents of the components are within the scope of the disclosure of the examples of the present application. Specifically, the weight described in the description of the examples of the present application may be a mass unit such as µg, mg, g, kg, and the like, which are well known in the fields of chemistry and chemical engineering. The reagents or instruments used are conventional products that can be purchased commercially if the manufacturer is not indicated.

### Example 1

### (1) Preparation of polyvinylidene fluoride binder

4 kg of deionized water and 2g of methyl cellulose ether were added in a 10 L high-pressure vessel, vacuumed and O₂ was replaced with N₂ three times, 5 g of tert-butyl peroxypivalate and 2 g of sodium bicarbonate was added, and 1 kg of vinylidene fluoride monomers were filled to make the pressure reach 7 MPa, mixed and stirred for 30 min, the temperature was heated up to 45°C to carry out a polymerization reaction; after 6 hrs of the polymerization reaction, 30 g of cyclohexane was added to continue the reaction, and the reaction was terminated when the pressure in the reaction kettle dropped to 2 MPa; the reaction system was centrifuged to collect a solid phase, and then washed and dried to obtain the polyvinylidene fluoride binder;

The relevant parameters of the polyvinylidene fluoride binder prepared in this example are as follows: weight average molar mass of 1.8 million, polydispersity index of 2.1, degree of crystallinity of 42%, and Dv50 particle size of 60 µm; the polyvinylidene fluoride binder prepared in this example was dissolved in N-methyl pyrrolidone solution, to make a solution with a mass percentage concentration of 4 wt%, and the viscosity of the solution was measured to be 3600 mPa·s;

### (2) Preparation of cathode slurry:

3.99 kg of lithium iron phosphate, 32.8 g of polyvinylidene fluoride binder prepared in step (1), 57.4 g of acetylene black, 12.3 g of a dispersant, and 2.4 kg of N-methyl pyrrolidone (NMP) were mixed well to obtain a cathode slurry; in the solute of the cathode slurry, a mass content of the polyvinylidene fluoride binder was 0.8%;

(3) the cathode slurry prepared in step (2) was applied by scraping onto a carbon coated aluminum foil, baked at 110°C for 15 min, cut into discs of 15 mm in diameter after cold pressing, and then made into a button cell was with a lithium metal sheet, a separator, and an electrolyte.

### Examples 2 to 5

The process was basically the same as Example 1, differing in that the mass percentage content of the polyvinylidene fluoride binder in step (2) was 0.9%, 1%, 1.1% and 1.2%, respectively.

### Example 6

The process was basically the same as Example 1, differing in that in step (1), 25 g of cyclohexane was added after the polymerization reaction was carried out for 8 hrs to continue the reaction;

The parameters of the polyvinylidene fluoride binder prepared in this example are as follows: weight average molar mass of 2.5 million, polydispersity index of 2.1, degree of crystallinity of 44%, and Dv50 particle size of 80 µm; the polyvinylidene fluoride binder prepared in this example was dissolved in N-methyl pyrrolidone solution, to make a solution with a mass percentage concentration of 4 wt%, and the viscosity of the solution was measured to be 4300 mPa·s.

### Examples 7 to 10

The process was basically the same as Example 6, differing in that the mass percentage content of the polyvinylidene fluoride binder in step (2) was 0.9%, 1%, 1.1% and 1.2%, respectively.

### Example 11

The process was basically the same as Example 1, differing in that in step (1), 20 g of cyclohexane was added after the polymerization reaction was carried out for 10 hrs to continue the reaction;

The parameters of the polyvinylidene fluoride binder prepared in this example are as follows: weight average molar mass of 3.2 million, polydispersity index of 2.2, degree of crystallinity of 45%, and Dv50 particle size of 100 µm; the polyvinylidene fluoride binder prepared in this example was dissolved in N-methyl pyrrolidone solution, and made into a solution with a mass percentage concentration of 4 wt%, and the viscosity of the solution was measured to be 4900 mPa·s.

### Examples 12 to 15

The process was basically the same as Example 11, differing in that the mass percentage content of the polyvinylidene fluoride binder in step (2) was 0.9%, 1%, 1.1% and 1.2%, respectively.

### Example 16

The process was basically the same as Example 1, differing in that in step (1), 15 g of cyclohexane was added after the polymerization reaction was carried out for 12 hrs to continue the reaction;

The parameters of the polyvinylidene fluoride binder prepared in this example are as follows: weight average molar mass of 5 million, polydispersity index of 2.2, degree of crystallinity of 46%, and Dv50 particle size of 150 µm; the polyvinylidene fluoride binder prepared in this example was dissolved in N-methyl pyrrolidone solution, to make a solution with a mass percentage concentration of 4 wt%, and the viscosity of the solution was measured to be 6500 mPa·s.

### Examples 17 to 18

The process was basically the same as Example 16, differing in that the mass percentage content of the polyvinylidene fluoride binder in step (2) was 0.6% and 0.7%, respectively.

### Example 19

The process was basically the same as Example 1, differing in that in step (1), 33 g of cyclohexane was added after the polymerization reaction was carried out for 5 hrs to continue the reaction;

The parameters of the polyvinylidene fluoride binder prepared in this example are as follows: weight average molar mass of 1.5 million, polydispersity index of 2.18, degree of crystallinity of 41.5%, and Dv50 particle size of 45 µm; the polyvinylidene fluoride binder prepared in this example was dissolved in N-methyl pyrrolidone solution, to make a solution with a mass percentage concentration of 4 wt%, and the viscosity of the solution was measured to be 3000 mPa·s.

### Example 20

The process was basically the same as Example 19, differing in that the mass percentage content of the polyvinylidene fluoride binder in step (2) was 1.8%.

### Example 21

The process was basically the same as Example 1, differing in that the temperature of the polymerization reaction in step (1) was 65°C;

The parameters of the polyvinylidene fluoride binder prepared in this comparative example are as follows: weight average molar mass of 2 million, polydispersity index of 2.4, degree of crystallinity of 52%, and Dv50 particle size of 50 µm; the polyvinylidene fluoride binder prepared in this example was dissolved in N-methyl pyrrolidone solution, and made into a solution with a mass percentage concentration of 4 wt%, and the viscosity of the solution was measured to be 4000 mPa·s.

### Example 22

The process was basically the same as Example 1, differing in that the time of the polymerization reaction in step (1) was 12 hrs;

The parameters of the polyvinylidene fluoride binder prepared in this comparative example are as follows: weight average molar mass of 1.83 million, polydispersity index of 2.1, degree of crystallinity of 42%, and Dv50 particle size of 60 µm; the polyvinylidene fluoride binder prepared in this example was dissolved in N-methyl pyrrolidone solution, and made into a solution with a mass percentage concentration of 4 wt%, and the viscosity of the solution was measured to be 3700 mPa s.

### Example 23

The process was basically the same as Example 1, differing in that the pressure of the polymerization reaction in step (1) was 9 MPa;

The parameters of the polyvinylidene fluoride binder prepared in this comparative example are as follows: weight average molar mass of 1.6 million, polydispersity index of 2.15, degree of crystallinity of 42%, Dv50 particle size of 50 µm; the polyvinylidene fluoride binder prepared in this example was dissolved in N-methyl pyrrolidone solution, to make a solution with a mass percentage concentration of 4 wt%, and the viscosity of the solution was measured to be 2500 mPa·s.

### Comparative Example 1

The process was basically the same as Example 1, differing in that, in step (2), the polyvinylidene fluoride binder prepared in step (1) was replaced with a commercially available polyvinylidene fluoride (grade 701A produced by HEC) with a weight average molar mass of 0.8 million, so that the mass percentage of polyvinylidene fluoride in the slurry solute was 2.5%.

### Comparative Example 2

The process was basically the same as Example 1, differing in that the temperature of the polymerization reaction in step (1) was 35°C;

The parameters of the polyvinylidene fluoride binder prepared in this comparative example are as follows: weight average molar mass of 1.2 million, polydispersity index of 1.8, degree of crystallinity of 40%, Dv50 particle size of 30 µm; the polyvinylidene fluoride binder prepared in this example was dissolved in N-methyl pyrrolidone solution, to make a solution with a mass percentage concentration of 4 wt%, and the viscosity of the solution was measured to be 450 mPa·s.

### Comparative Example 3

The process was basically the same as Example 1, differing in that the time of the polymerization reaction in step (1) was 4 hrs;

The parameters of the polyvinylidene fluoride binder prepared in this comparative example are as follows: weight average molar mass of 1.1 million, polydispersity index of 1.9, degree of crystallinity of 38%, Dv50 particle size of 25 µm; the polyvinylidene fluoride binder prepared in this example was dissolved in N-methyl pyrrolidone solution, to make a solution with a mass percentage concentration of 4 wt%, and the viscosity of the solution was measured to be 232 mPa·s.

### Comparative Example 4

The process was basically the same as Example 1, differing in that the pressure of the polymerization reaction in step (1) was 5 MPa;

The parameters of the polyvinylidene fluoride binder prepared in this comparative example are as follows: weight average molar mass of 1.4 million, polydispersity index of 2.2, degree of crystallinity of 41%, Dv50 particle size of 40 µm; the polyvinylidene fluoride binder prepared in this example was dissolved in N-methyl pyrrolidone solution, to make a solution with a mass percentage concentration of 4 wt%, and the viscosity of the solution was measured to be 1800 mPa·s.

### Characterization tests:

The polyvinylidene fluoride binders, electrode plates, or button cells made in each of the examples and comparative examples were subjected to the following characterization tests:
(1) The polyvinylidene fluoride binder was scanned through a scanning electron microscope to determine the morphology and the particle size;
(2) The electrode plate was subjected to a brittleness test, which was performed as follows:
   A specimen of the electrode plate was taken along a transverse direction after cold pressing, three specimen with a size of (4 cm × 25 cm longitudinal) and an area of 100cm² were obtained, the sample 100cm² was pre-folded (folded along the 25 cm longitudinal direction), and the pre-folded experimental film sheet was placed on the flat surface of an experimental table, rolled once with a 2 kg cylindrical roller, and examined under the light to see if there was a point of leaked light, if there was a point of leaked light the specimen was not qualified, and if there is no point of leaked light then the number of rolling was recorded, and the experimental specimen was repeatedly folded along the longitudinal crease, and the crease was again examined under the light, until the emergence of light transmitted and the number of rolling n1 was recorded. The above operation was repeated to obtain the numbers of rolling, n2, n3, for the second and the third specimen, and an average number of rolling = (n1 + n2 + n3)/3 was calculated;
(3) Binding force test, which was performed as follows:
   Referring to the national standard "Test Method for 180° Peel Strength of Adhesive", a specimen of a width of 30 mm * a length of 100-160 mm was cut with a blade, and a special double-sided tape was adhered on a steel plate, the tape having a width of 20 mm * a length of length 90-150 mm, and the specimen of the electrode plate obtained above was adhered on the double-sided tape with the test side facing down, and then rolled three times in the same direction with a pressure roller;
   A paper strip having a width equal to the width of the electrode plate and a length 80-200 mm longer than the length of the specimen is inserted under the electrode plate and fixed by a masking tape;
   A tensile machine (sensitivity of 1 N) from Sansi was switch on, and when the indicator was on, the limit block was adjusted to an appropriate position, an end of the steel plate without the electrode plate was fixed with the lower grip. The paper strip was folded upwards and fixed with the upper grip, the position of the upper grip was adjusted by using the "up" and "down" buttons on the manual controller attached, and then the test was carried out and the value was recorded.
(4) Capacity retention rate test for battery, which was performed as follows:
   The battery was charged with a 1/3 C constant current to 3.65 V, then charged with a 3.65 V constant voltage to a current of 0.05 C, left for 5 min, and then discharged at 1/3 C to 2.5 V, and the capacity obtained was recorded as the initial capacity C0. The above steps were repeated for the same battery mentioned above, and at the same time, the discharging capacity Cn after the nth cycle of the battery was record, then the capacity retention rate of the battery after each cycle was Pn = Cn/C0* 100%, and a curve of the battery capacity retention rate versus the number of cycles was obtained with the 100 points of values of P1, P2......P100 on the vertical axis, and the corresponding number of cycles on the horizontal axis;
   During this test, the first cycle corresponds to n = 1, the second cycle corresponds to n = 2, ...and the 100th cycle corresponds to n = 100; the data of the battery capacity retention rate was measured after 500 cycles under the above test conditions, i.e., the value of P500.

The above test data are listed in Table 1:

**Table 1**

| No | Amount of polyvinylidene fluoride | M_{W} of polyvinylide ne fluoride /million | Polydispersi ty index | Crystalli nity | Dv50 /µm | Average no. of rolling of electrode plate | Bindin g force N/m | Capacity retention rate after 500 cycles |
|---|---|---|---|---|---|---|---|---|
| Example 1 | 0.8% | 180 | 2.1 | 42% | 60 | 8 | 25.0 | 86.0% |
| Example 2 | 0.9% | 180 | 2.1 | 42% | 60 | 7.67 | 26.2 | 86.2% |
| Example 3 | 1.0% | 180 | 2.1 | 42% | 60 | 7 | 27.1 | 86.3% |
| Example 4 | 1.1% | 180 | 2.1 | 42% | 60 | 6.67 | 28.4 | 86.6% |
| Example 5 | 1.2% | 180 | 2.1 | 42% | 60 | 6 | 29.3 | 86.9% |
| Example 6 | 0.8% | 250 | 2.1 | 44% | 80 | 7 | 26.1 | 86.1% |
| Example 7 | 0.9% | 250 | 2.1 | 44% | 80 | 6.67 | 27.3 | 86.5% |
| Example 8 | 1.0% | 250 | 2.1 | 44% | 80 | 6 | 28.6 | 86.8% |
| Example 9 | 1.1% | 250 | 2.1 | 44% | 80 | 6.67 | 29.2 | 87.1% |
| Example 10 | 1.2% | 250 | 2.1 | 44% | 80 | 5 | 30.5 | 87.4% |
| Example 11 | 0.8% | 320 | 2.2 | 45% | 100 | 6 | 27.8 | 86.7% |
| Example 12 | 0.9% | 320 | 2.2 | 45% | 100 | 5.67 | 29.3 | 87.0% |
| Example 13 | 1.0% | 320 | 2.2 | 45% | 100 | 5 | 30.6 | 87.3% |
| Example 14 | 1.1% | 320 | 2.2 | 45% | 100 | 4.67 | 31.9 | 87.6% |
| Example 15 | 1.2% | 320 | 2.2 | 45% | 100 | 4 | 33.2 | 88.0% |
| Example 16 | 0.8% | 500 | 2.2 | 46% | 150 | 4 | 32.9 | 87.8% |
| Example 17 | 0.6% | 500 | 2.2 | 46% | 150 | 5 | 30.7 | 87.4% |
| Example 18 | 0.7% | 500 | 2.2 | 46% | 150 | 4.67 | 31.7 | 87.7% |
| Example 19 | 0.8% | 150 | 2.18 | 41.5% | 45 | 8.67 | 20 | 84.8% |
| Example 20 | 1.8% | 150 | 2.18 | 41.5 | 45 | 3 | 29 | 87% |
| Example 21 | 0.8% | 200 | 2.4 | 52% | 30 | 3 | 25.9 | 86.1% |
| Example 22 | 0.8% | 183 | 2.1 | 42% | 60 | 8 | 25.1 | 86.1% |
| Example 23 | 0.8% | 160 | 2.15 | 42% | 50 | 8.67 | 22 | 85.1% |
| Comparative Example 1 | 2.5% | 80 | 1.85 | 37% | 15 | 3 | 23.2 | 83.8% |
| Comparative Example 2 | 0.8% | 120 | 1.8 | 40% | 30 | 10 | 15 | 83.2% |
| Comparative Example 3 | 0.8% | 110 | 1.9 | 38% | 25 | 11 | 13 | 82.5% |
| Comparative Example 4 | 0.8% | 140 | 2.2 | 41% | 40 | 9 | 18 | 84.5% |

By analyzing the data in Table 1 and comparing Example 1, Example 6, Example 11, Example 16, and Example 19, it can be seen that as the weight average molar mass rises, the Dv50 particle size, the binding force, and cycling performance of the binder generally tend to increase, while the average number of rolling of the electrode plate gradually decreases. As can be seen from Example 17, when the weight average molar mass of polyvinylidene fluoride reaches 5 million, the amount of only 0.6% can provide a binding force of 30.7 N/m, and the cycling performance of the battery is good, although the brittleness of the electrode plate is slightly higher, but it is still superior to the commercially available binder (Comparative Example 1). It can be seen that the binder provided in the present application can effectively reduce the amount of binder in the cathode active material and show good toughness and binding force of the electrode plate as well as good cycling performance of the battery.

By comparing Example 1 and Example 21, it can be found although the molecular weights of the two are close to each other, in Example 21, due to the high reaction temperature, the crystallinity and polydispersity index of the polyvinylidene fluoride prepared by the polymerization reaction are also high, which affects the brittleness of the electrode plate, and the average number of rolling decreases significantly, therefore, the temperature of the polymerization reaction is preferably controlled within 45°C-60° C, which enables the crystallinity to be within an appropriate range of 38%-48% and the polydispersity index to be within a preferable range of 2-2.3.

As can be seen from comparisons between Examples 1 to 5, Comparative Examples 6 to 10, Comparative Examples 11 to 15, Comparative Examples 16 to 18, and Comparative Examples 19 to 20, as the amount of polyvinylidene fluoride rises, the binding force and the cycling performance increase, but the electrode plate becomes more brittle with the average number of rolling decreasing, especially in Example 20, as the amount of binder is substantially increased to 1.8%, the enhancement in the cycling performance and binding force becomes limited, but the number of rolling decreases significantly.

Compared to Example 1, in Example 22, the time of polymerization reaction is longer, and as the monomer continues to be consumed and the pressure decreases, the conditions for polymerization can no longer be met, which means prolonging the reaction time does not allow the polymerization reaction to continue, therefore, it is more appropriate to control the reaction time to less than 10 hrs, for the consideration of energy consumption and efficiency.

Compared to Example 1, in Example 23, the reaction pressure is higher, and the monomer enters the reaction liquid at a higher pressure, and more monomer has entered the reaction liquid, which can lead to a wide range of polymerization reactions, resulting in an increase in the amount of polyvinylidene fluoride generated, while with the decrease of monomers, the polyvinylidene fluoride lacks the supply of monomers thus a relatively small molecular weight is formed, which has a certain effect on the performance of the battery.

Compared with Example 1, in Comparative Example 2, the reaction temperature is low, the driving force for copolymerization is small, so that the polymerization reaction is insufficient, and the molecular weight prepared is small, resulting in a substantial decrease in the binding force as well as a significant decrease in the cycling performance at the same addition amount.

Compared to Example 1, in Comparative Example 3, the polymerization reaction time is shorter, the polymerization reaction cannot continue, and the molecular weight prepared is relatively small, which also results in a decrease in binding and cycling properties.

Compared to Example 1, in Comparative Example 4, the reaction pressure is lower, the monomers enter the reaction solution at a smaller pressure, and the monomers for reaction cannot be continuously supplied, which is not conducive to a continued polymerization, and the molecular weight of the product produced is too low to satisfy the requirements for binding, and the cycling performance of the battery is also reduced.

The various technical features of the above-described embodiments may be combined arbitrarily, and all possible combinations of the various technical features of the above described embodiments have not been described for the conciseness of description; however, as long as there is no contradiction in the combinations of these technical features, they should be considered to be within the scope specified in the present specification.

The above-described embodiments are only several embodiments of the present application, which are described in a more specific and detailed manner, but are not to be construed as a limitation of the scope of the application. It should be noted that, for those skilled in the art, several modifications and improvements can be made without departing from the conception of the present application, all of which fall within the scope of protection of the present application. Therefore, the scope of protection of the present application shall be subject to the appended claims.

## Claims

1. A binder, comprising a polyvinylidene fluoride having a weight average molar mass of 1.5 million to 5.0 million; optionally, the polyvinylidene fluoride has a weight average molar mass of 1.8 million to 3.2 million.

2. The binder according to claim 1, wherein the polyvinylidene fluoride has a polydispersity index of 1.5 to 2.5; optionally, the polyvinylidene fluoride has a polydispersity index of 2 to 2.3.

3. The binder according to any of claims 1 to 2, wherein the polyvinylidene fluoride has a number average molar mass of 0.6 million to 3 million; optionally, the polyvinylidene fluoride has a number average molar mass of 1 million to 2 million.

4. The binder according to any of claims 1 to 3, wherein the polyvinylidene fluoride has a Dv50 particle size of 50 µm-150 µm; optionally, the polyvinylidene fluoride has a Dv50 particle size of 60 µm-100 µm.

5. The binder according to any of claims 1 to 4, wherein the polyvinylidene fluoride has a crystallinity of 38%-48%; optionally, the polyvinylidene fluoride has a crystallinity of 40%-45%.

6. The binder according to any of claims 1 to 5, wherein a viscosity of a binder solution made from the polyvinylidene fluoride dissolved in N-methyl pyrrolidone is 3500 mPa·s-5000 mPa·s, and a mass percentage content of the binder in the binder solution is 3%-5%.

7. A preparation method of the binder according to any of claims 1 to 6, comprising steps of:
conducting a polymerization reaction of vinylidene fluoride monomers for 6 hrs-10 hrs under a non-reactive gas atmosphere, a reaction pressure of 6 MPa-8 MPa, and a reaction temperature of 45°C-60°C; and
adding a chain transfer agent, and when a pressure in reaction system was reduced to 2 MPa-2.5 MPa, terminating the reaction and carrying out a solid-liquid separation to retain a solid phase.

8. The preparation method according to claim 7, wherein the chain transfer agent comprises one or more of cyclohexane, isopropanol, methanol, and acetone.

9. The preparation method according to any of claims 7 to 8, wherein an amount of the chain transfer agent used is 1.5%-3% of a mass of the vinylidene fluoride monomers.

10. The preparation method according to any of claims 7 to 9, wherein the polymerization reaction comprises steps of:
adding a solvent and a dispersant to a container, evacuating and filling the container with a non-reactive gas;
adding an initiator and a pH adjuster to the container, adjusting pH to 6.5-7, and then adding the vinylidene fluoride monomers so that a pressure in the container reaches 6 MPa-8 MPa; and
heating, after stirring for 30 min-60 min, to 45°C-60°C for polymerization reaction.

11. The preparation method according to claim 10, wherein an amount of the solvent used is 2-8 times a mass of the vinylidene fluoride monomers.

12. The preparation method according to any of claims 10 to 11, wherein the dispersant comprises one or more of cellulose ether and polyvinyl alcohol; optionally, the cellulose ether comprises one or more of methyl cellulose ether and carboxyethyl cellulose ether.

13. The preparation method according to any of claims 10 to 12, wherein an amount of the dispersant used is 0.1%-0.3% of a mass of the vinylidene fluoride monomers.

14. The preparation method according to any of claims 10 to 13, wherein the initiator is an organic peroxide; optionally, the organic peroxide comprises one or more of tert-pentyl peroxypivalate, tert-amyl peroxypivalate, 2-ethyl peroxydicarbonate, diisopropyl peroxydicarbonate, and tert-butyl peroxypivalate.

15. The preparation method according to any of claims 10 to 14, wherein an amount of the initiator used is 0.15%-1% of a mass of the vinylidene fluoride monomers.

16. The preparation method according to any of claims 10 to 15, wherein the pH adjuster comprises one or more of potassium carbonate, potassium bicarbonate, sodium carbonate, sodium bicarbonate, and ammonia water.

17. The preparation method according to any of claims 10 to 16, wherein an amount of the pH adjuster used is 0.05%-0.2% of a mass of the vinylidene fluoride monomers.

18. Application of the vinylidene fluoride defined in any of claims 1 to 6 in the preparation of a binder.

19. A secondary battery, comprising a cathode plate, a separator, and an anode plate, the separator is disposed between the cathode plate and the anode plate;
wherein the cathode plate comprises a cathode current collector and a cathode active material layer disposed on at least one surface of the cathode current collector, the cathode active material layer comprises the binder according to any of claims 1 to 6.

20. The secondary battery according to claim 19, wherein a mass percentage content of the binder in the cathode active material layer is 0.6%-1.2%; optionally, a mass percentage content of the binder is 0.6%-0.8%.

21. A battery module, comprising the secondary battery according to any of claims 19 to 20.

22. A battery pack, comprising the battery module according to claim 21.

23. An electric device, comprising one or more of the secondary battery according to any of claims 19 to 20, the battery module according to claim 21, and the battery pack according to claim 22.
